**Europäisches Patentamt**

**European Patent Office**

**Office européen des brevets**

(11) Publication number : **0 392 621 B1**

# (12) EUROPEAN PATENT SPECIFICATION

(45) Date of publication of patent specification :
**24.06.92 Bulletin 92/26**

(51) Int. Cl.⁵ : **B65G 47/26, B65G 15/24**

(21) Application number : **90200858.0**

(22) Date of filing : **09.04.90**

(54) **Conveyor.**

(30) Priority : **10.04.89 NL 8900877**

(43) Date of publication of application :
**17.10.90 Bulletin 90/42**

(45) Publication of the grant of the patent :
**24.06.92 Bulletin 92/26**

(84) Designated Contracting States :
**AT BE CH DE DK ES FR GB GR IT LI LU NL SE**

(56) References cited :
**DE-A- 2 727 638**
**US-A- 3 934 707**
**US-A- 3 951 254**

(73) Proprietor : **RAPISTAN VAN DER LANDE B.V.**
**Vanderlandelaan 2, Postbus 18**
**NL-5460 AA Veghel (NL)**

(72) Inventor : **van den Goor, Jakobus Marie**
**Boxhornpad 6**
**NL-5641 WG Eindhoven (NL)**

(74) Representative : **Vollebregt, Cornelis Jacobus et al**
**Algemeen Octrooibureau P.O. Box 645**
**NL-5600 AP Eindhoven (NL)**

## Description

The invention relates to a conveyor provided with a plurality of endless conveying means forming sections located one behind the other, which conveying means extend in the longitudinal direction of the conveyor, and which can be driven in such a manner that objects present on the upper parts of the conveying means can be moved in the longitudinal direction of the conveyor, whilst lifting means are provided, by means of which frame parts supporting the upper parts of the conveying means are vertically movable between a first position, in which objects present on the upper parts of conveying means are carried along by the conveying means, and a second position, in which the upper sides of the conveying means are located under the upper sides of the frame parts having a fixed arrangement which are located on both sides of the conveying means.

Such a device according to the preamble of the claim is known from DE-A-2727638. In this known device each section comprises a single conveying means in the shape of a sprocket chain, whose upper side is supported by a plate extending in the longitudinal direction of said upper side. On both sides of the sprocket chain there are arranged frame parts for supporting objects present in a certain section, when the upper part of the conveyor chain belonging to the section in question has been moved down. Said known device is practically unsuitable for moving objects of various dimensions. In addition to this said known device will be very liable to wear.

From US-A-3,951,254 there is known a device provided with two endless conveying means located side by side, said conveying means being formed by chains. At the sides of the chains directed away from each other there are arranged frame parts for supporting the objects when the upper sides of the chains are down. The endless chains are supported by frame parts extending in the longitudinal direction of said chains, said frame parts being supported on air bellows. Said known device in fact has the same disadvantages as the known device described above. Furthermore all air bellows are mutually coupled and an independent adjustment of the upper parts of the chain per section is not possible.

According to the invention the sections located one behind the other each comprise a plurality of conveyor belts located side by side, which conveyor belts, when seen in plan view, are located between frame parts having a fixed arrangement, which can jointly support an object in the second position of the conveyor belts, whilst for each section there is provided an auxiliary frame which has rotatable rolls journalled in the auxiliary frame, rotatable about axes of rotation extending perpendicularly to the longitudinal direction of the conveyor and supporting the upper parts of the conveyor belt, and between the auxiliary frame and fixed frame parts of the conveyor there are provided the lifting means as well as supporting means, which support the auxiliary frame part in the position in which the upper sides of the conveyor belts are located under the upper sides of the frame parts having a fixed arrangement, and being located between the conveyor belts.

By using several conveyor belts located side by side in cooperation with frame parts located between the conveyor belts for supporting the objects when the upper sides of the conveyor belts are moved down, it is possible to handle objects of various dimensions in an efficient manner. In addition to this the device has a simple and efficient construction in which a good guiding of the conveyor belts is ensured, whilst the auxiliary frame is stably supported in the down position, which contributes towards a long life of the lifting means and which prevents undesirable movements of the upper parts of the conveyor belts when they are no longer in contact with the objects to be conveyed.

It is noted that from US-A-3,934,707, GB-A-2,187,156 and WO-A-8403875 there are known conveyors provided with endless conveyor belts and with frame parts located between and beside said conveyor belts, which are supported by inflatable hoses extending in the longitudinal direction of said frame parts, all this in such a manner that the frame parts can be moved between a first position, in which the upper surfaces of the frame parts project above the upper sides of the conveyor belts for supporting objects in a position in which said objects cannot be carried along by the conveyor belts, and a second position, in which the upper surfaces of the frame parts are located under the upper sides of the conveyor belts, so that objects can be moved by means of the conveyor belts.

When such a construction is used the mass formed by the frame parts to be moved is relatively large, so that a comparatively great deal of energy is required for moving said frame parts. The design of the inflatable hoses supporting the frame parts must be accordingly heavy, whilst at the same time guides must be provided in order to prevent undesirable vibrations of the frame parts.

In addition to that, such a construction is less suitable for use with a conveyor provided with several sections located one behind the other, in each of which objects present near the section in question are driven or not, according to which is desired, as in that case there is a danger that objects undesirably strike against frame parts in their upward position.

The invention will be further explained hereinafter with reference to a possible embodiment of the construction according to the invention diagrammatically illustrated in the accompanying figures.

Figure 1 is a diagrammatic plan view of a conveyor according to the invention, wherein in some parts of the Figure certain parts have been left out in order to show parts located thereunder.

Figure 2 is a cross-section of Figure 1.

Figure 3 shows on a larger scale a part of Figure 2.

Figure 4 is a cross-section of Figure 3.

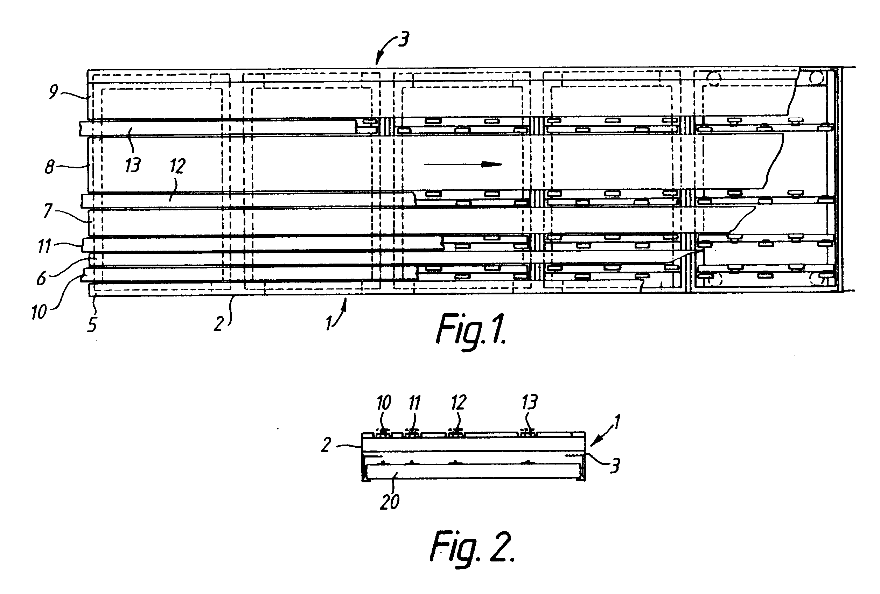

The device shown in Figures 1 and 2 comprises a frame 1 provided with a pair of longitudinal beams 2 and 3 extending parallel to each other, said beams being mutually connected by cross beams 4.

The upper surface of the conveyor comprises a plurality of elongated plate-shaped parts 5 - 9 fixed to the frame 1, said plate-shaped parts extending in the longitudinal direction of the conveyor and being located in one plane.

In the spaces located between the plate-shaped parts 5 - 9 there are located the upper sides of endless conveyor belts 10 - 13.

As will be apparent in particular from Figure 1 five groups of conveyor belts 10 - 13 are arranged one behind the other in the illustrated embodiment, when seen in the intended direction of movement (arrow A) of the objects to be moved by means of the conveyor. Each group of conveyor belts 10 - 13 located one behind the other, when seen transversely to the longitudinal direction of the conveyor, forms a so-called section of the conveyor belt. The conveyor belts 10 - 13 belonging to a section are thereby supported by a frame-shaped auxiliary frame part 14, built up of longitudinal beams 15 and cross beams 16.

The auxiliary frame part furthermore comprises beams 17 extending parallel to the longitudinal beams 15, said beams 17 supporting support wheels 18. Said support wheels 18 are freely rotatable about axes of rotation 19 extending perpendicularly to the longitudinal direction of the conveyor belts, and serve to support the upper sides of the conveyor belts 10 - 13. For supporting the lower sides of the conveyor belts 10 - 13 the device is provided with rolls 20, which are freely rotatable about axes of rotation 21 extending parallel to the axes of rotation 19 and being supported by the frame beams 2 and 3.

The auxiliary frame 14 is supported by lifting means 22, which are arranged between the lower sides of the frame beams 15 and carriers 23 secured to the frame beams 2. The lifting means 22 may e.g. be formed be air bellows or the like.

In their lowermost position the frame beams 15 are also supported by supports 24 provided between the carriers 23 and the frame beams 15, said supports 24 preferably being made of a slightly resilient material.

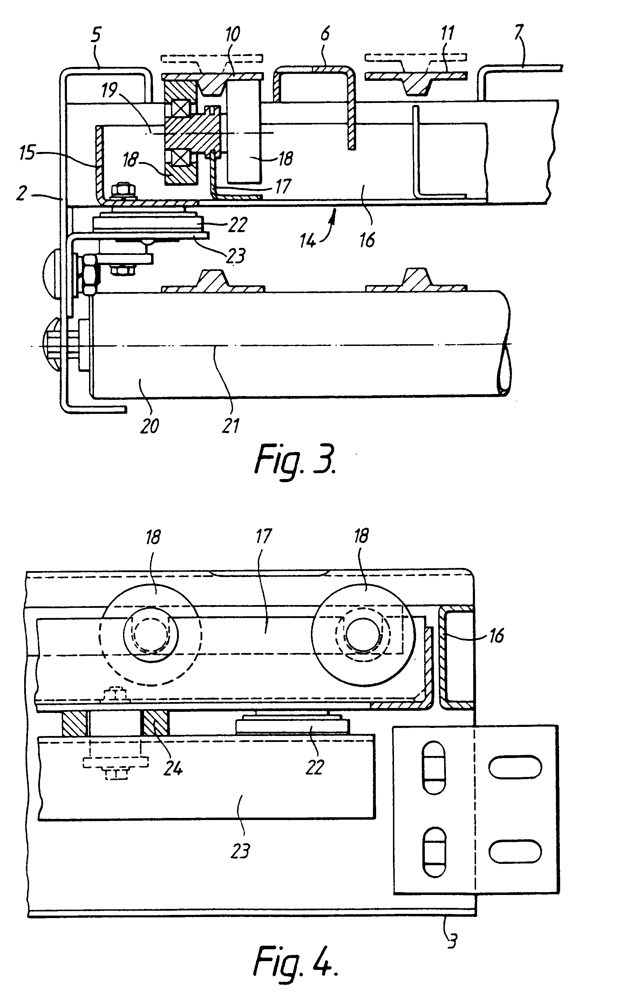

The upper parts of the conveyor belts 10 - 13 being part of a section, which are supported by a frame part 14, can now be moved by means of the lifting means 22 supporting the frame part 14 in question, between the position indicated by full lines in Figure 3, in which the upper faces of the relevant upper sides of the conveyor belts are located under the upper sides of the fixed frame parts 5 - 9, and a position indicated by dotted lines, in which the relevant upper sides of the conveyor belts are located above the frame parts 5 - 10 having a fixed arrangement.

Near each section formed by a group of conveyor belts 10 - 13 which are located one behind the other, when seen in a direction transversely to the longitudinal direction of the conveyor, there is arranged a sensor, e.g. an optical sensor or a mechanical feeler, which detects whether or not an object is present on the section in question. The sensor in question is connected with the operating means for the lifting devices 22 of a section located more upstream, all this in such a manner that when an object is detected on a certain section, the conveyor belts of the adjacent section located upstream of the section in question are moved down to the position indicated by full lines in Figure 3. Instead of the section located directly upstream, or together with said section, it is also possible for a section located further upstream to be operated in such a manner.

From the above it will be apparent that during normal operation the conveyor belts of the various sections located one behind the other, when seen in the direction of movement of the objects according to arrow A will be driven in such a manner, that objects present on the conveyor will be moved in the direction according to arrow A. When an object present on a certain section is stopped for some reason, however, so that said object does not move any more, the sensor belonging to this section will detect this, and the upper sides of the conveyor belts belonging to a section (sections) located more upstream will be moved down, so that an object which lands on the section whose conveyor belts have been moved down, will not be moved any further, but its movement will be stopped, because it will come to lie on one or more of the frame parts 5 - 9 having a fixed arrangement, as a result of which it will be effected that the relevant object supplied is stopped quickly and immediately.

The presence of said stationary object will again be detected by the sensor belonging to this section, as a result of which the upper sides of the conveyor belts of a section (sections) located further upstream will be moved down.

It will be apparent that thus a number of objects can be accumulated on the conveyor, whilst the conveyor belts do not exert any undesirable forces on said objects.

As soon as the blocking of the first object is released and said object is moved again, the sensor in question will detect this, as a result of which a signal is delivered to the control mechanism of the lifting devices 22 of the relevant section(s) located upstream, so that the upper sides of the conveyor belts belonging to said section(s) will be moved up again be means of the lifting devices 22, in order to set the object present on said section moving again. It will be apparent, that thus the objects accumulated on the conveyor can be gradually set moving again in order to be discharged.

**Claims**

1. A conveyor provided with endless conveying means (10-13) forming sections located one behind the other, which conveying means (10-13) extend in the longitudinal direction of the conveyor, and which can be driven in such a manner that objects present on the upper sides of the conveying means (10-13) can be moved in the longitudinal direction of the conveyor, whilst lifting means (12) are provided, by means of which the upper parts (15-17) of frame parts supporting the conveying means are vertically movable between a first position, in which objects present on the upper sides of conveying means (10-13) are carried along by the conveying means, and a second position, in which the upper sides of the conveying means (10-13) are located under the upper sides of the frame parts (5-9) having a fixed arrangement which are located on both sides of the conveying means (10-13), characterized in that the sections located one behind the other each comprise a plurality of conveyor belts (10-13) located side by side, which conveyor belts, when seen in plan view, are located between frame parts (5-9) having a fixed arrangement, which can jointly support an object in the second position of the conveyor belts, whilst for each section there is provided an auxiliary frame (14), belonging to the section in question, which has rotatable rolls (18) journalled in the auxiliary frame (14), rotatable about axes (19) of rotation extending perpendicularly to the longitudinal direction of the conveyor and supporting the upper sides of the conveyor belts, and between the auxiliary frame (14) and fixed frame parts (23) of the conveyor there are provided the lifting means (22) as well as supporting means (24), which support the auxiliary frame part (14) in the position in which the upper sides of the conveyor belts (10-13) are located under the upper sides of the frame parts.

**Patentansprüche**

1. Förderer, der mit Endlosfördereinrichtungen (10-13) versehen ist, die eine hinter der anderen angeordnete Sektionen bilden, wobei sich die Fördereinrichtungen (10-13) in Längsrichtung der Förderers erstrecken und derart angetrieben werden können, daß auf den Oberseiten der Fördereinrichtungen (10-13) vorhandene Gegenstände in Längsrichtung des Förderers bewegt werden können, und wobei Hubeinrichtungen (22) vorgesehen sind, mittels denen die oberen Teile (15-17) von Rahmenteilen, die die Fördereinrichtungen lagern, zwischen einer ersten Position, in der auf den Oberseiten der Fördereinrichtungen (10-13) vorhandene Gegenstände von den Fördereinrichtungen getragen werden, und einer zweiten Position, in der die oberen Seiten der Fördereinrichtungen (10-13) unter den Oberseiten der eine feste Anordnung besitzenden Rahmenteile (5-9), die sich auf beiden Seiten der Fördereinrichtungen (10-13) befinden, angeordnet sind, vertikal beweglich sind, dadurch gekennzeichnet, daß die eine hinter der anderen angeordneten Sektionen jeweils eine Vielzahl von Förderbändern (10-13) umfassen, die Seite an Seite und in der Draufsicht zwischen den eine feste Anordnung besitzenden Rahmenteile (5-9) angeordnet sind, welche zusammen einen Gegenstand in der zweiten Position der Förderbänder lagern können, daß für jede Sektion ein Hilfsrahmen (14) vorgesehen ist, der zu der entsprechenden Sektion gehört und drehbare Rollen (18) aufweist, die im Hilfsrahmen (14) gelagert und um Drehachsen (19) drehbar sind, die sich senkrecht zur Längsrichtung des Förderers erstrecken und die Oberseiten der Förderbänder lagern, und daß zwischen dem Hilfsrahmen (14) und den festen Rahmenteilen (23) des Förderers die Hubeinrichtungen (22) sowie Lagereinrichtungen (24) vorgesehen sind, welche den Hilfsrahmenteil (14) in der Position lagern, in der die Oberseiten der Förderbänder (10-13) unter den Oberseiten der Rahmenteile angeordnet sind.

**Revendications**

1. Convoyeur équipé de moyens de transport sans fin (10-13) formant des sections situées les unes derrière les autres, ces moyens de transport (10-13) s'étendant dans la direction longitudinale du convoyeur et pouvant être entraînés de sorte que les objets présents sur les faces supérieures des moyens de transport (10-13) peuvent être déplacés dans la direction longitudinale du convoyeur, tandis qu'il est prévu des moyens de levage (22) à l'aide desquels les parties supérieures (15-17) d'éléments de cadre supportant les moyens de transport sont déplaçables verticalement entre une première position, dans laquelle les objets présents sur les faces supérieures des moyens de transport (10-13) sont entraînés le long des moyens de transport, et une seconde position, dans laquelle les faces supérieures des moyens de transport (10-13) sont situées au-dessous des faces supérieures des éléments de cadre (5-9) qui possèdent un agencement fixé et sont situés des deux côtés des moyens de transport (10-13), caractérisé en ce que les sections situées les unes derrière les autres comprennent chacune une pluralité de bandes convoyeuses (10-13) disposées côte-à-côte, lesquelles bandes convoyeuses sont situées, lorsqu'on regarde selon une vue en plan, entre des éléments de cadre (5-9) possédant un agencement fixé et qui peuvent supporter conjointement un objet dans la seconde position des bandes convoyeuses, alors que pour chaque section il est prévu un cadre auxiliaire (14), qui fait partie de la section en question et possède des rouleaux rotatifs (18) tourillonnés dans le cadre auxiliaire (14) et pouvant tourner autour d'axes de rotation (19) s'étendant perpendiculairement à la direction longitudinale du convoyeur et supportant les faces supérieures des bandes convoyeuses, et qu'entre le cadre auxiliaire (14) et des éléments de cadre fixes (23) du convoyeur sont prévus les moyens de levage (22) ainsi que le: moyens de support (24) qui supportent la partie formant cadre auxiliaire (14) dans la position dans laquelle les faces supérieures des bandes convoyeuses (10-13) sont situées au-dessous des faces supérieures des éléments de cadre.

*Fig.1.*

*Fig. 2.*

EP 0 392 621 B1

Fig. 3.

Fig. 4.